Europäisches Patentamt

European Patent Office

Office européen des brevets

(11) Veröffentlichungsnummer: **0 140 198**
A2

(12) **EUROPÄISCHE PATENTANMELDUNG**

(21) Anmeldenummer: **84111807.8**

(22) Anmeldetag: **03.10.84**

(51) Int. Cl.⁴: **B 62 D 65/00**
**B 25 H 1/00**

(30) Priorität: 29.10.83 DE 3339371

(43) Veröffentlichungstag der Anmeldung:
08.05.85 Patentblatt 85/19

(84) Benannte Vertragsstaaten:
DE FR GB SE

(71) Anmelder: MANNESMANN Aktiengesellschaft
Mannesmannufer 2
D-4000 Düsseldorf 1(DE)

(72) Erfinder: Sundstedt, Klas
Lillgardsväg 10
S-186 00 Vallentuna(SE)

(72) Erfinder: Persson, Per
Tornslingan 48
S-142 00 Trangsund(SE)

(72) Erfinder: Alfredsson, Erik
Sparvstigen 16
S-461 44 Trollhättan(SE)

(54) **Montagestrasse für Kraftfahrzeuge.**

(57) Eine Kippvorrichtung kann Fahrzeuge (F) von zwei nebeneinander verlaufenden Montagestraßen aufnehmen. Die Vorrichtung besteht aus zwei im Abstand zueinander und hinter-einander angeordneten portalartigen Rahmen (1), von denen im Zusammenhang mit der Erfindung nur der unten liegende und links nach auf-wärts führende Teil interessiert. Die hintereinander angeordneten Rahmen haben einen Abstand voneinander, der größer ist, als die Länge des zu montierenden Fahrzeugs.

In dem unteren Rahmenteil bei (1a) und in dem nach oben gerichteten Rahmenteil (1b) befindet sich eine Führungsschiene, in die Rollen (4) eingreifen, die an der Vorder- bzw. Hinterseite eines rechteckigen Rahmens (12) angeordnet sind. Der Rahmen (12) seinerseits trägt das in der Montage befindliche Fahrzeug (F). Der somit an seinem vorderen und hinteren Ende geführte Rahmen (12) kann mit Hilfe der endlosen Kette (6) von der waagerechten Stellung in die gekippte und gleichzeitig angehobene Stellung gebracht werden, die mit strichpunktierten Linien dargestellt ist. Die Unterseite des Fahrzeugs ist hierbei nicht nur von der Seite bequem zugänglich, sondern befindet sich auch in einer zur Arbeit bequemen Höhe.

./...

Fig.1

Die Erfindung betrifft eine Montagestraße für Kraftfahrzeuge mit einer
an einer Montagestation angeordneten Vorrichtung zum seitlichen Hochkippen des Kraftfahrzeuges, wobei das Fahrzeug während der Kippbewegung
an einem kippbaren rechteckigen Rahmen befestigt ist.

Einrichtungen der genannten Art sind bereits bekannt. So ist z. B. bereits vorgeschlagen worden, Fahrzeugkarosserien für die Montagearbeiten
auf einem fahrbaren Tragwerk anzuordnen, welches die Montagestraße
durchfährt. Auf diesem Tragwerk befindet sich eine Schwenkeinrichtung,
mit deren Hilfe der die Karosserie haltende Rahmen aus der Waagerechten
in die senkrechte Stellung gebracht werden kann. Während des Aufrichtens
wird der genannte Rahmen mit der zutiefst liegenden Seite in Querrichtung verschoben, so daß die Unterseite der Karosserie von der Seite aus
zugänglich ist, ohne daß der Arbeiter die Förderbahn, auf der sich das
Tragwerk bewegt, betreten muß (DE-OS 24 39 903).

Nachteilig an der bekannten Vorrichtung ist jedoch, daß die quer verlaufenden Teile des hochkippbaren Rahmens auch bei zur Seite gekippter Karosserie quer unter deren Boden hindurchlaufen. Dadurch wird die Anbringung von längsverlaufenden Elementen, beispielsweise der Auspuffanlage, am Karosserieboden erschwert.

Aufgabe der Erfindung ist es daher, eine Montagestraße der o. g. Art
so zu gestalten, daß der Zugang zum Boden des hochgekippten Fahrzeuges
behinderungsfrei zugänglich ist. Diese Aufgabe wird durch die Erfindung
dadurch gelöst, daß der Rahmen an seinen quer zur Transportrichtung verlaufenden Seiten mit Führungselementen in Führungsbahnen eingreift, die
in einer zur Transportrichtung quer verlaufenden senkrechten Ebene angeordnet sind und aus einem waagerechten und einem nach seitlich oben verlaufenden Teil bestehen, wobei der Rahmen mit Hilfe eines Zugmittels
in den Führungsbahnen bewegbar ist. Auf diese Weise werden nicht nur
die Nachteile der bekannten Vorrichtung vermieden, sondern es werden
zusätzliche Vorteile erzielt. Diese bestehen darin, daß es bei entsprechender Gestaltung des Verlaufs der Führungsbahnen möglich ist, das Fahrzeug auch in eine mehr oder weniger als 90° betragende gekippte
Lage zu bringen und dabei dennoch den Bodenbereich der Karosserie
montagegünstig zu positionieren.

Ein weiterer Vorteil der erfindungsgemäßen Vorrichtung besteht darin,
daß die Kippvorrichtung, die ohnehin nur zu bestimmten Montagevorgängen
benötigt wird, nicht ständig mittransportiert werden muß. Durch den
stationären Einbau der Vorrichtung aber ergibt sich der zusätzliche
Vorteil, daß eine Hochkippvorrichtung auch zwei oder mehr nebeneinander
verlaufende Montagestraßen bedienen kann, wenn, was ohne Schwierigkeiten
möglich ist, der waagerechte Teil der Führungsbahnen entsprechend zur
zweiten und weiteren Montagestraße hin verlängert wird.

Da infolge der ortsfesten Ausführung der Hochkippvorrichtung auch der
dabei das Fahrzeug aufnehmende Rahmen in dieser Vorrichtung verbleibt,
erfolgt die Übergabe des auf einer Rollenbahn herangeführten Kraftfahrzeuges an den Rahmen dadurch, daß die Förderbahn in diesem Bereich absenkbar ist.

Weitere Einzelheiten der Erfindung sind in der Zeichnung dargestellt
und werden im folgenden erläutert. Es zeigen:

Fig. 1     ein erstes Ausführungsbeispiel für eine Montagestraße in der
           Stirnansicht,

Fig. 2     die Montagestraße gemäß Fig. 1 in der Seitenansicht,

Fig. 3     ein anderes Ausführungsbeispiel der Erfindung, ebenfalls in
           Stirnansicht wiedergegeben,

Fig. 4     einen Schnitt durch Fig. 3 auf der Linie IV-IV,

Fig. 5     einen Schnitt durch Fig. 3 auf der Linie V-V und

Fig. 6     die Spannvorrichtung für die endlose Kette nach Fig. 3 in
           größerem Maßstab.

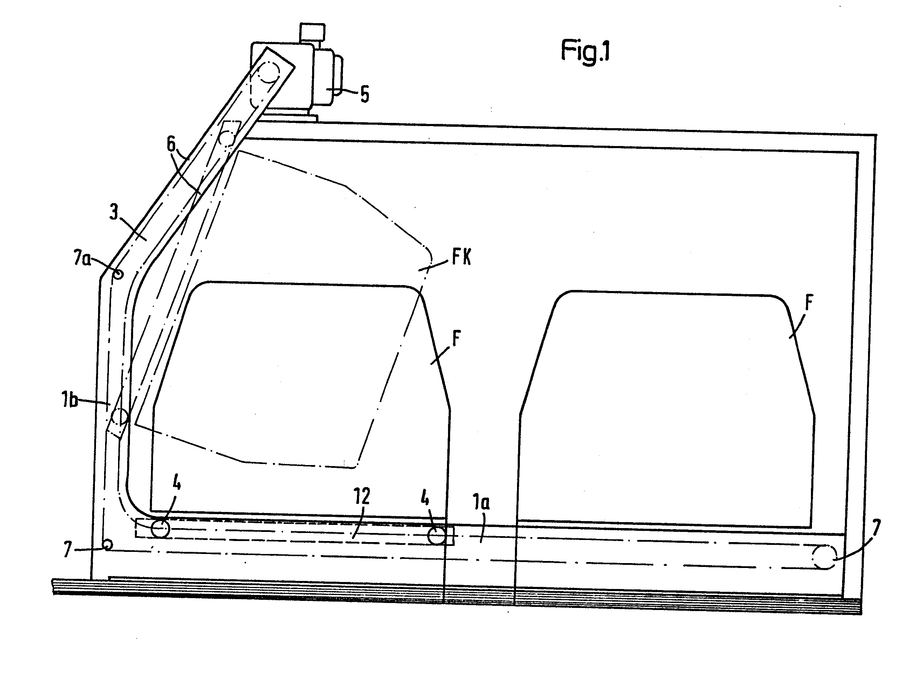

Fig. 1 zeigt in schematischer Darstellung eine Kippvorrichtung, welche Fahrzeuge von zwei nebeneinander verlaufenden Montagestraßen aufnehmen kann. Die Vorrichtung besteht aus zwei im Abstand zueinander und hintereinander angeordneten portalartigen Rahmen 1, von denen im Zusammenhang mit der Erfindung nur der in Fig. 1 unten liegende und links nach aufwärts führende Teil interessiert. Die hintereinander angeordneten Rahmen, von denen Fig. 1 nur einen zeigt, haben einen Abstand voneinander, der größer ist, als die Länge des zu montierenden Fahrzeugs.

In dem unteren Rahmenteil bei 1a und in dem (in Fig. 1 links befindlichen) nach oben gerichteten Rahmenteil 1b befindet sich eine Führungsschiene, in die Rollen 4 eingreifen, die an der Vorder- bzw. Hinterseite eines rechteckigen Rahmens 12 angeordnet sind. Der Rahmen 12 seinerseits trägt das in der Montage befindliche Fahrzeug F. Der somit an seinem vorderen und hinteren Ende geführte Rahmen 12 kann mit Hilfe der ebenfalls in Fig. 1 bei 6 angedeuteten endlosen Kette von der waagerechten Stellung in die gekippte und gleichzeitig angehobene Stellung gebracht werden, die in Fig. 1 mit strichpunktierten Linien dargestellt ist. Das Fahrzeug F gelangt dadurch in die mit FK angegebene Lage. Die Unterseite des Fahrzeugs ist hierbei nicht nur von der Seite bequem zugänglich, sondern befindet sich auch in einer zur Arbeit bequemen Höhe. Ganz nach dem Verlauf der Führungsbahn 12 und deren Länge im nach oben gerichteten Teil kann auch eine (wie in Fig. 1 gezeigt) über 90° hinausgehende Kippstellung erzielt werden.

Wenn an dem in Fig. 1 links dargestellten Fahrzeug mit Hilfe der Kippvorrichtung die vorgesehenen Montagearbeiten durchgeführt worden sind, wird es wieder in die Ausgangslage F gebracht und von dem Rahmen 12 gelöst. Da die Führungsschiene 3 im waagerechten Teil 1a des portalförmigen Rahmens 1 (in Fig. 1 nach rechts) bis zu einer zweiten Montagestraße reichen, kann auch von dort ein Fahrzeug F aufgenommen und durch Transport nach links bis in die gekippte Stellung gebracht werden.

- 7 -

4

Der Quertransport der jeweils mit dem Rahmen 12 verbundenen Fahrzeuge
erfolgt mit Hilfe des bei 5 angegebenen Motors, der eine endlose Kette
6 antreibt. Bei 7 und 7a sind die Führungs- und Umlenkräder für die
endlose Kette 6 dargestellt.

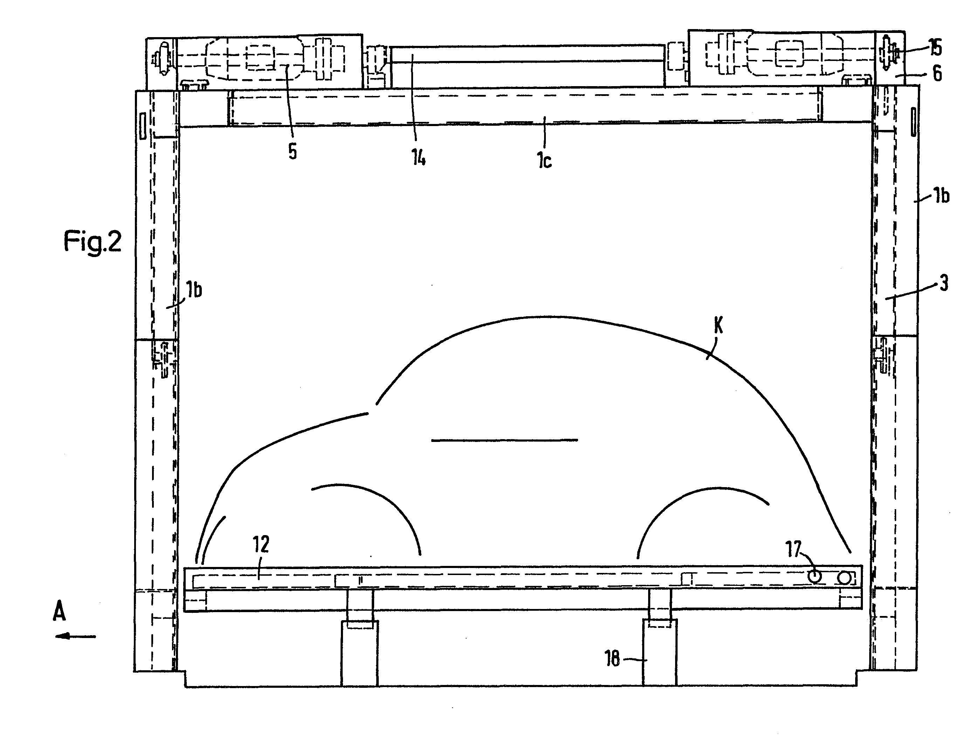

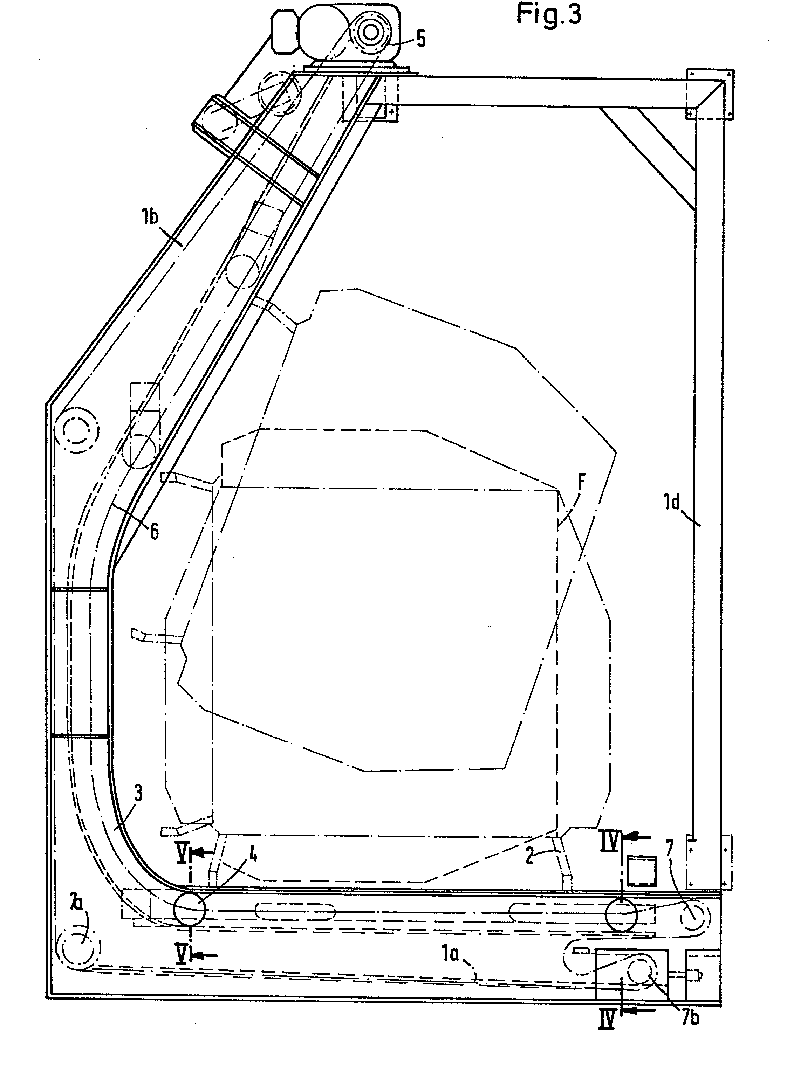

In Fig. 2 ist die Montagestation nach Fig. 1 in der Seitenansicht wiedergegeben. Es ergibt sich daraus, daß die die Führungsschienen 3 aufweisenden Rahmen in, bezogen auf die Transportrichtung A, einem Abstand
hintereinander an der Montagestraße aufgestellt sind, der größer ist,
als es der Länge eines zu montierenden Fahrzeugs entspricht. Das zu montierende Fahrzeug wird, z. B. auf unter dem Karosseriekörper befestigten
Kufen, mit Hilfe einer Rollenbahn 17 in den Bereich transportiert, der
sich zwischen den beiden Rahmenteilen 1b, 1b befindet. Das Stück 17 der
Rollenbahn, das zwischen den Rahmen 1b, 1b liegt, ist absenkbar. Hierzu
dienen die Hubzylinder 18. Durch das Absenken des Rollenbahnabschnitts
17 legt sich die zu bearbeitende Fahrzeugkarosserie auf den Rahmen 12
auf, mit dem sie fest verbunden wird. Der Rahmen 12 greift, wie insbesondere aus Fig. 3 ersichtlich, mit Rollen 4, die an den vorderen
und hinteren Stirnseiten des Rahmens 12 angebracht sind, in die Führungsschienen 3 ein, die sich in den Rahmen 1b befinden.

Wie sich weiterhin aus Fig. 2 ergibt, sind die beiden Teile 1b, die die
Führungsbahnen enthalten, oben durch einen Längsholm 1c miteinander
verbunden. Auf diesem Längsholm befinden sich die Antriebe 5 für die
beiden endlosen Ketten, mit deren Hilfe der Rahmen 12 und die darauf
befindliche Fahrzeugkarosserie bewegt werden. Die beiden Antriebsmotore
5 sind über eine Welle 14 miteinander verbunden, die für den Gleichlauf
sorgt. Die Antriebskraft wird jeweils über ein Kettenrad 15 auf die
Kette übertragen.

Fig. 3 zeigt an einem anderen Ausführungsbeispiel eine Vorderansicht
einer Fahrzeugkippeinrichtung. Es handelt sich hierbei um eine Einrichtung, die zum Einsatz in nur einer Montagestraße dient. Die Führungsschienen 3 sind durch senkrechte Holme 1d zu geschlossenen Rahmen ver-

vollständigt. Die Gestaltung der Führungsschienen 3 bewirkt, daß das Fahrzeug aus der Normallage in eine um ca. 110° gekippte Lage gebracht wird, bei der der Boden der Karosserie von der Seite, auf Fig. 3 bezogen von links, zugänglich ist. Die endlose Kette 6 ist mit der Achse einer der Rollen 4 verbunden und verläuft mit ihrem einen Strang in der Führungsschiene 3. Der zurücklaufende Kettenstrang wird über Kettenräder 7a und eine Spannvorrichtung 7b außerhalb der Führungsschiene 3 geführt, bevor er über das Umlenkrad 7 wieder in die Führungsschiene 3 zurückgeleitet wird. In Fig. 3 sind ferner die Kufen 2 zu sehen, die die Karosserie während der Montage tragen.

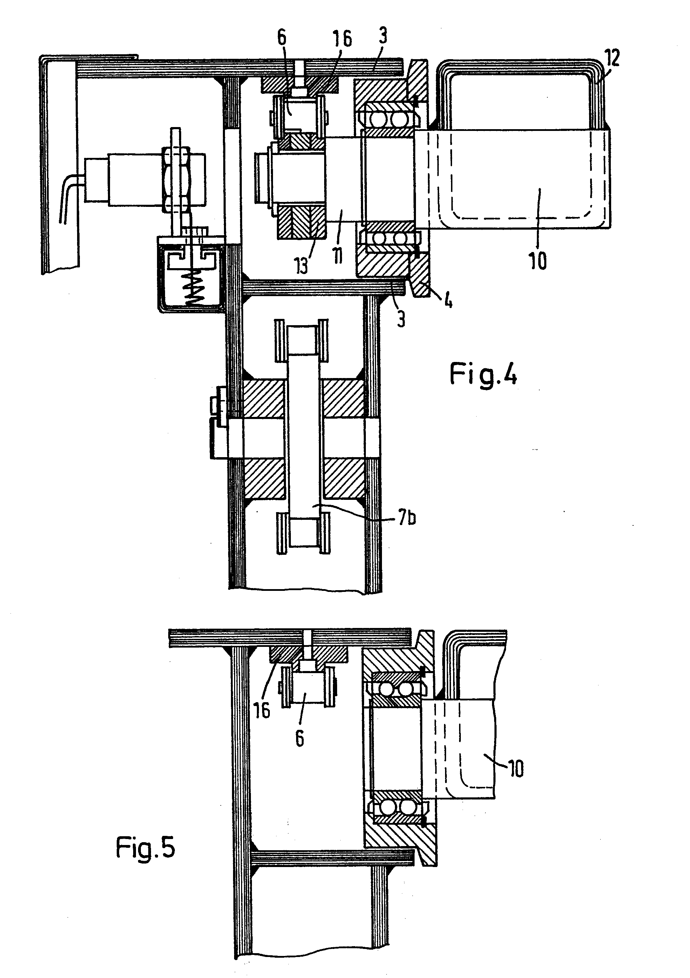

Fig. 4 zeigt Einzelheiten zur Anordnung der Führungsbahn und der endlosen Kette in der Führungsschiene 3. Die Rolle 4 ist, wie schon früher erwähnt, am Rahmen 12 befestigt. Hierzu dient eine Achse 10, die in Richtung zu der Führungsschiene 3 vorsteht und auf der mit Hilfe eines Wälzlagers die eigentliche Führungsrolle 4 sitzt. Die Achse 10 ist um den Teil 11 nach innen in den von der U-förmigen Führungsschiene umschlossenen Hohlraum hinein verlängert. An dem verlängerten Teil 11 ist mit Hilfe einer Lasche 13 die endlose Kette 6 befestigt. Damit die Kette 6 die Richtungsänderungen der Führungsschiene störungsfrei durchläuft, ist eine Kettenführung 16 an der Innenseite des in Fig. 4 obenliegenden Schenkels der Führungsschiene 3 angebracht.

In Fig. 5 ist eine der Fig. 4 entsprechende Darstellung wiedergegeben, jedoch handelt es sich hierbei um eine in die Führungsschiene 3 eingreifende Führungsrolle 4, deren Achse 10 nicht mit der endlosen Kette 6 in Verbindung steht. Wie schon früher erwähnt, ist aus Gründen der Einfachheit jeweils nur eine der beiden stirnseitigen Führungsrollen des Rahmens 12 mit der Antriebskette 6 verbunden.

-9-

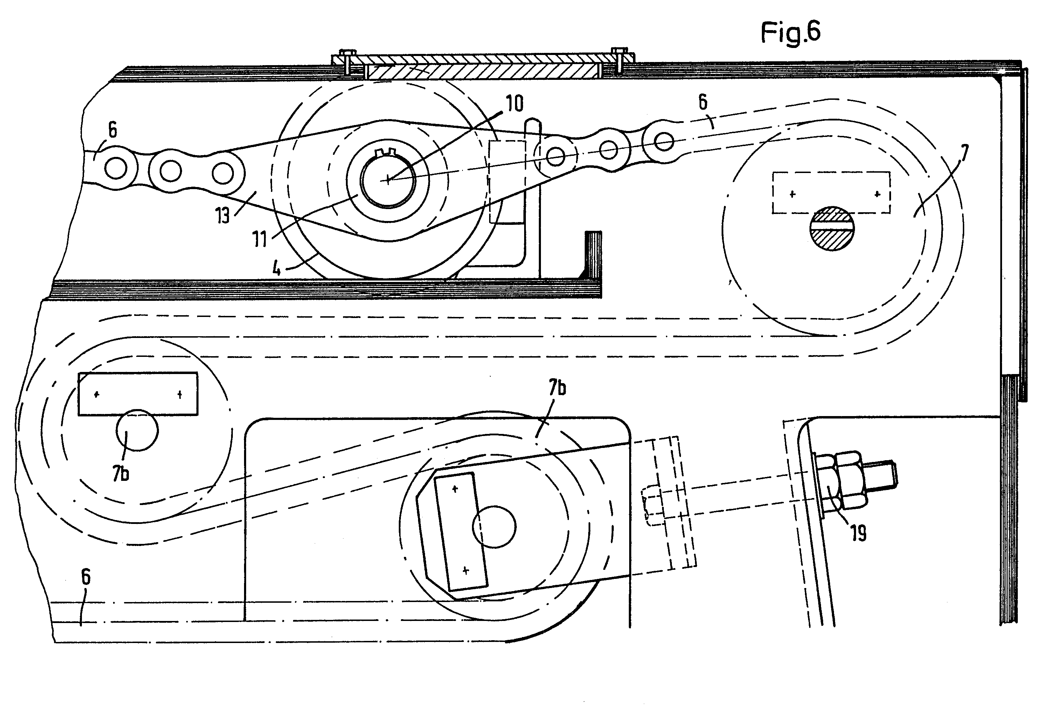

Fig. 6 zeigt an einem vergrößerten Ausschnitt, entsprechend der unteren rechten Ecke von Fig. 3 zum einen die Anordnung der Lasche 13 an der Verlängerung 11 der Achse 10, auf der sich die Rolle 4 dreht. Zum anderen ist gezeigt, wie auf einfache Weise eine Spannmöglichkeit für die Kette 6 untergebracht werden kann. Die erforderliche Kettenspannung wird mit Hilfe eines verstellbaren Kettenrades erzeugt. Hierzu ist das Kettenrad in einer Gabel drehbar gelagert. Die Gabel ist mit einem gewindetragenden Bolzen verbunden und von Muttern 19 längenverstellbar an einer rahmenfesten Konsole befestigt.

-I-

Mannesmann Aktiengesellschaft

Mannesmannufer 2

4000   Düsseldorf

24. August 1984

23 163 B1/GB

---

## Montagestraße für Kraftfahrzeuge

---

### Patentansprüche

---

1. Montagestraße für Kraftfahrzeuge mit einer an einer Montagestation angeordneten Vorrichtung zum seitlichen Hochkippen des Kraftfahrzeugs, wobei das Fahrzeug während der Kippbewegung an einem rechteckigen Rahmen befestigt ist,
dadurch gekennzeichnet,
daß der Rahmen (12) an seinen quer zur Transportrichtung (A) verlaufenden Seiten mit Führungselementen (4) in Führungsbahnen (3) eingreift, die in einer senkrechten, zur Transportrichtung (A) quer verlaufenden Ebene angeordnet sind und aus einem waagerechten und nach seitlich oben verlaufenden Teil bestehen, wobei der Rahmen (12) mit Hilfe eines Zugmittels (6) in den Führungsbahnen bewegbar ist.

- 2 -

2. Vorrichtung nach Anspruch 1, dadurch gekennzeichnet,

   daß der Rahmen (12) an der Vorder- und Hinterseite je zwei nach außen
   vorstehende Rollen (4) trägt, die in zum Rahmen (12) hin offene, sich
   quer zur Transportrichtung (A) erstreckende Führungsschienen (3) eingreifen, welche jeweils aus einem waagerechten Abschnitt (1a) und
   einem sich mit einem bogenförmigen Übergang anschließenden, aufwärts
   verlaufenden Abschnitt (1b) bestehen, wobei in jeder Führungsschiene
   (3) eine endlose, mit einem richtungsumschaltbaren Antrieb verbundene
   Kette (6) angeordnet ist, deren einer Strang mit dem Rahmen (12) in
   Verbindung steht.

3. Vorrichtung nach den Ansprüchen 1 und 2, dadurch gekennzeichnet,

   daß der waagerechte Abschnitt (1a) der Führungsschiene (3) sich über
   zwei oder mehr nebeneinanderliegende Förderbahnen der Montagestraße
   erstreckt.

4. Vorrichtung nach den Ansprüchen 1 bis 3, dadurch gekennzeichnet,

   daß das Fahrzeug (F) während der Montage mit Kufen (2) ausgestattet
   ist und daß der Rahmen (12) mit den das Fahrzeug tragenden Kufen (2)
   verriegelbar ist.

5. Vorrichtung nach den Ansprüchen 1 bis 4, dadurch gekennzeichnet,

   daß die Achsen (10) der Rollen (4) mit der Kette (6) verbunden sind.

6. Vorrichtung nach Anspruch 5, dadurch gekennzeichnet,

   daß an den Achsen (10) verlängernde Ansätze (11) vorgesehen sind,
   auf welchen mit der Kette (6) verbundene Laschen (13) gelagert sind.

7. Vorrichtung nach Anspruch 6, dadurch gekennzeichnet,

   daß die endlose Kette (6) von einem Umlenkrad (7) im freien Ende des
   waagerechten Teils (1a) der Führungsschiene (3) zum oberen Ende des
   nach oben verlaufenden Teils (1b) in einer parallel zur Führungsschiene (3) angeordneten Kettenführung (16) geführt und über ein
   Kettenrad (15) mit einem Motor (5) verbunden ist.

8. Vorrichtung nach Anspruch 7, dadurch gekennzeichnet,

   daß der Motor (5) über eine Welle (14) sowohl mit den in der vorderen
   als auch den in der hinteren Führungsschiene (3) angeordneten Kettenrädern (15) verbunden ist.

9. Vorrichtung nach den Ansprüchen 1 bis 8, dadurch gekennzeichnet,

   daß der rücklaufende Strang der Kette (6) um Umlenkräder (7a) geführt ist, die sich außerhalb der Führungsschiene (3) auf deren dem
   Fahrzeug (F) abgewandten Seite befinden.

-//-

Fig.1

1/5

0140198

Fig.2

0140198

Fig.3

Fig.4

Fig.5

0140198

Fig.6